# EUROPEAN PATENT APPLICATION

(11) **EP 4 275 563 A1**
(43) Date of publication of application: **15.11.2023**
(21) Application number: 21733028.1
(22) Date of filing: 05.01.2021
(51) Int. Cl.: A47K 17/00, E05B 49/00, G07F 17/00, G07F 7/02, G07F 7/08, E05B 47/00

(54) **PAY-TOILET-USAGE CONTROL DEVICE, PAY TOILET SYSTEM, AND PAY-TOILET-USAGE CONTROL PROGRAM**

(71) Applicant: EXCELSIOR INC., Tokyo 154-0023 (JP)
(72) Inventor: ADACHI, Kanichi, Tokyo 154-0023 (JP)
(74) Representative: Winter, Brandl - Partnerschaft mbB
(86) International application number: PCT/JP2021/000082
(87) International publication number: WO 2021/125363

(57) **Abstract**

A pay toilet usage control device for achieving appropriate use of a toilet such as a temporary toilet on a chargeable basis is provided. A pay toilet usage control device 20 includes a payment unit 22, a pre-use unlocking section 211, an in-use locking section 212, a post-use unlocking section 213, and a post-use locking section 214. The payment unit 22 executes a payment process related to a use fee for a user to use a pay toilet T. The pre-use unlocking section 211 unlocks a locked lock 231 at an entrance to the pay toilet T when a payment process has been executed. The in-use locking section 212 locks the unlocked lock 231 when the user uses the pay toilet T. The post-use unlocking section 213 unlocks the locked lock 231 when the user has completed using the pay toilet T. The post-use locking section 214 locks the unlocked lock 231 after the lock 231 is unlocked by the post-use unlocking section 213.

## Description

### Technical Field

The present invention relates to a pay toilet usage control device, a pay toilet system and a pay toilet usage control program.

### Background Art

Installation of temporary toilets has recently become common such as in sites for evacuation at the time of an emergency disaster, resting areas in mountains or on beaches, and any other places in need thereof. Due to its feature of being able to store human wastes in a tank, a temporary toilet can be easily installed regardless of whether a sewage pipe for sending waste water and the like to a sewage disposal plant is laid in ground or not, and hence is flexible in installation and very convenient.

Temporary toilets are requisites for users and some users are willing to pay a fee to use a high-quality temporary toilet, which is creating an emerging need.

### Citation List

### Patent Literature

Patent Literature 1: Japanese Patent Laid-Open No. 2020-90860

### Summary of Invention

### Technical Problem

However, for conventional temporary toilets, collecting use fees from users is not considered per se for a reason that they are difficult to maintain regularly, a common perception that temporary toilets are public in nature, or a reason that they are not installed in places with staff at all times.

The present invention has been made in view of these circumferences and has an object of providing a pay toilet usage control device, a pay toilet system and a pay toilet usage control program for achieving appropriate use of a toilet such as a temporary toilet on a chargeable basis.

### Solution to Problem

The object is attained by the following means.

A pay toilet usage control device includes a payment unit, a pre-use unlocking section, an in-use locking section, a post-use unlocking section and a post-use locking section. The payment unit executes a payment process related to a use fee for a user to use a pay toilet. The pre-use unlocking section unlocks a locked lock at an entrance to the pay toilet when a payment process has been executed. The in-use locking section locks the unlocked lock when the user uses the pay toilet. The post-use unlocking section unlocks the locked lock when the user has completed using the pay toilet. The post-use locking section locks the unlocked lock after the lock is unlocked by the post-use unlocking section.

A pay toilet system includes the pay toilet usage control device above and a portable temporary toilet including an unlocking- and locking-controllable lock at an entrance.

A pay toilet usage control program is configured to make an information processing device function as the pay toilet usage control device.

### Advantageous Effect of Invention

According to the pay toilet usage control device of the present invention, the payment unit executes a payment process related to a use fee for a user to use a pay toilet, and the pre-use unlocking section unlocks a locked lock at an entrance to the pay toilet when a payment process has been executed. The in-use locking section locks the unlocked lock when the user uses the pay toilet. The post-use unlocking section unlocks the locked lock when the user has completed using the pay toilet. The post-use locking section locks the unlocked lock after the lock is unlocked by the post-use unlocking section. This enables appropriate use of a toilet such as a temporary toilet on a chargeable basis.

### Brief Description of Drawings

[Figure 1] Figure 1 shows a schematic configuration of a pay toilet system to which a pay toilet usage control device according to an embodiment of the present invention is applied.
[Figure 2] Figure 2 is a block diagram showing a schematic configuration of a user terminal shown in Figure 1.
[Figure 3] Figure 3 is a block diagram showing a schematic configuration of a server shown in Figure 1.
[Figure 4] Figure 4 is a block diagram showing a schematic configuration of a manager terminal shown in Figure 1.
[Figure 5] Figure 5 is a block diagram showing a schematic configuration of the pay toilet usage control device shown in Figure 1.
[Figure 6] Figure 6 is a flowchart illustrating a procedure of processing that is executed in the pay toilet usage control device.

### Description of Embodiments

Embodiments of the present invention are now described with reference to the attached drawings . In description of the drawings, the same elements are denoted with the same reference numerals and overlapping descriptions are not provided. The dimensional ratio of the drawings is exaggerated for the sake of illustration and may be different from the actual ratio.

### <General configuration of system>

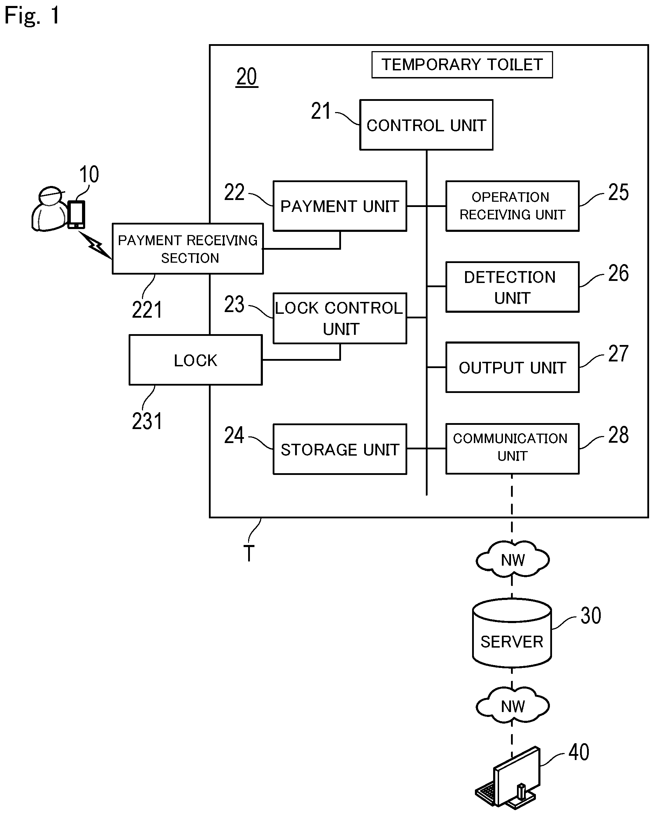

Figure 1 shows a schematic configuration of a pay toilet system to which a pay toilet usage control device according to an embodiment of the present invention is applied.

As shown in Figure 1, the pay toilet system is formed of a user terminal 10, a pay toilet usage control device 20, a server 30, a manager terminal 40, and a pay toilet T. The individual components are described in detail below.

### <User terminal 10>

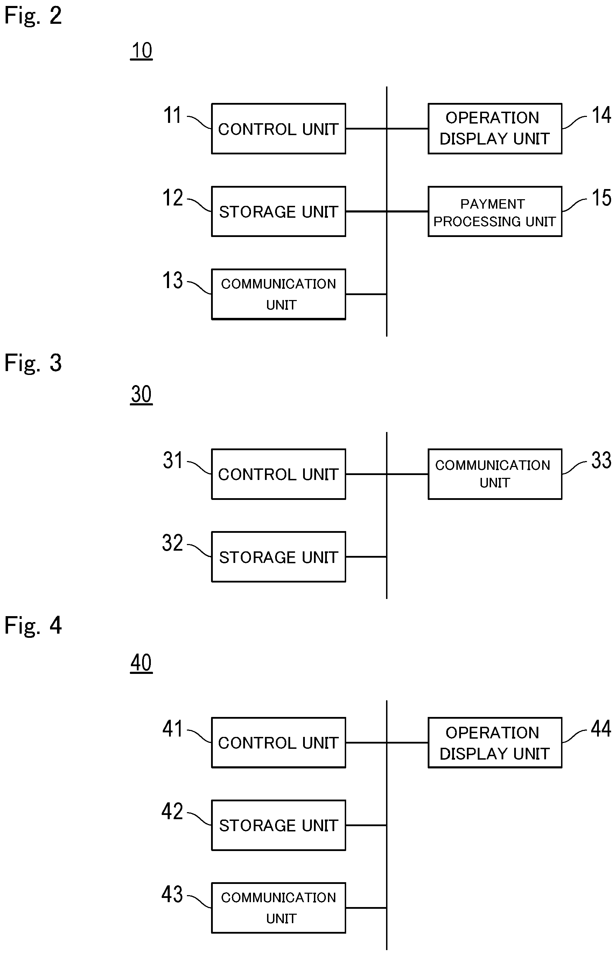

Figure 2 is a block diagram showing a schematic configuration of the user terminal shown in Figure 1.

The user terminal 10 is a device capable of executing various kinds of electronic payment processes, such as electronic money payment, card payment and two-dimensional code payment, and is an information processing terminal such as a smartphone used by a user, for example. The user terminal 10 can be of any configuration that is capable of executing payment processes electronically; for example, it may be a magnetic credit card or electronic money using a contact IC or a contactless IC. The present embodiment describes the user terminal 10 as being an information processing terminal.

As shown in Figure 2, the user terminal 10 includes a control unit 11, a storage unit 12, a communication unit 13, an operation display unit 14 and a payment processing unit 15. The components are communicatively connected with each other via a bus.

The control unit 11 includes a CPU (Central Processing Unit) and performs control of the components mentioned above and various kinds of computation processing.

The storage unit 12 has a ROM (Read Only Memory) for storing various programs and various data in advance, a RAM (Random Access Memory) for temporarily storing a program or data as a working area, a hard disk for storing various programs and various data and the like.

The communication unit 13 has an interface for communication with other terminals and devices over a network. The communication unit 13 performs transmission and reception of various data to/from the server 30, for example.

The operation display unit 14 is formed of an LCD (liquidcrystal display) or an organic EL display with a touch sensor or the like, displaying various kinds of information and receiving various operations of the user.

The payment processing unit 15 is a component for executing various kinds of electronic payment processes such as electronic money payment, card payment, and two-dimensional code payment, and an appropriate component such as a camera, a barcode reader, a contact IC chip and a contactless IC chip is used as needed depending on the payment scheme used.

### <Pay toilet usage control device 20>

The pay toilet usage control device 20 (hereinafter also called "control device 20") is a component provided in the pay toilet T for making a user use the pay toilet T appropriately.

As shown in Figure 1, the control device 20 includes a control unit 21, a payment unit 22, a lock control unit 23, a storage unit 24, an operation receiving unit 25, a detection unit 26, an output unit 27, and a communication unit 28. The components are communicatively connected with each other via a bus. The control unit 21, the storage unit 24 and the communication unit 28 of the control device 20 are not described any further as they have similar features to the control unit 11, the storage unit 12 and the communication unit 13 of the user terminal 10. The control device 20 functions as an information processing device in conjunction with the payment unit 22.

The payment unit 22 is a component for executing a payment process for a use fee of the pay toilet T. The payment unit 22 includes a payment receiving section 221 provided outside the pay toilet T as a component to transmit (deliver) or receive (acquire) information necessary for payment to/from the user. For example, where payment of the use fee is executed by electronic money payment, credit card payment, debit card payment or the like, the payment receiving section 221 is configured with a card reader for reading electronic money or information in various cards. Where payment of the use fee is executed by various kinds of code payment, the payment receiving section 221 is implemented in a code reader such as a camera for reading various codes in which identification information for identifying the user is encoded or in display of various codes in which identification information for identifying the pay toilet T is encoded. For example, when a code corresponding to the identification information of the pay toilet T is displayed on the payment receiving section 221, the user reads the code with a camera of the user terminal 10 and the like. The user can further enter the amount of the use fee into the user terminal 10 and transmit it to a payment system with the identification information of the pay toilet T and the user's identification information, thus executing code payment.

The payment unit 22 may also execute a payment process by acquiring information on the payment process for the user via a server connected by a network. For example, the user accesses a payment server such as the above-mentioned one by means of the user terminal 10 to execute the payment process. The payment unit 22 acquires identification information for identifying the user or the user terminal 10 from the user terminal 10 and queries the payment server for a result of the payment process associated with the identification information to acquire the result of the payment process. In this manner, the payment unit 22 can also execute a payment process for the use fee of the pay toilet T by acquiring the result of a payment process that was executed on another device.

The lock control unit 23 controls unlocking and locking of a lock 231, which determines whether it is possible to open and close a door at an entrance to the pay toilet T or not. The lock control unit 23 may control the unlocking and locking of the lock 231 in any manner. For example, the lock control unit 23 may control the unlocking and locking of the lock 231 electronically or mechanically.

The operation receiving unit 25 is a component, such as a button and a switch, for receiving an indication regarding the unlocking and locking of the lock 231 on the door at the entrance to the pay toilet T or extension of the usage time of the pay toilet T from the user present in the pay toilet T.

The detection unit 26 is a component to detect that the user has completed using the pay toilet T. The detection unit 26 is implemented by execution of a predetermined program by a CPU of the control unit 21, for example. The detection unit 26 may detect the completion of use of the pay toilet T by the user when it has received an indication of completion of use from the user in the pay toilet T through the operation receiving unit 25, for example. In this case, the operation receiving unit 25 functions as an indication unit. Alternatively, the detection unit 26 may detect the completion of use of the pay toilet T by the user when the lock 231 is unlocked via an operation by the user in the pay toilet T. Alternatively, the detection unit 26 may detect the completion of use of the pay toilet T by the user when it is determined that presence of a user within a certain range is not detected based on a detection result from a sensor that detects the presence of a user within the certain range in the pay toilet T. Such a sensor may be any of various sensors such as an infrared sensor and a human sensor.

The output unit 27 is a component to output various information such as an alert or notification to the user present in the pay toilet T, and may be a display for displaying images and text, a speaker for outputting sound and the like, for example.

### <Server 30>

Figure 3 is a block diagram showing a schematic configuration of the server shown in Figure 1.

The server 30 is a device connected with the control device 20 over a network and provided for management of the control device 20. The server 30 is built and operated by an operator that provides temporary toilet rental services, for example.

As shown in Figure 3, the server 30 includes a control unit 31, a storage unit 32, and a communication unit 33. The components are communicatively connected with each other via a bus. The control unit 31, the storage unit 32 and the communication unit 33 of the server 30 are not described any further as they have similar features to the control unit 11, the storage unit 12 and the communication unit 13 of the user terminal 10.

### <Manager terminal 40>

Figure 4 is a block diagram showing a schematic configuration of the manager terminal shown in Figure 1.

The manager terminal 40 is a terminal used by a manager of temporary toilets and it connects to the server 30 over a network.

As shown in Figure 4, the manager terminal 40 includes a control unit 41, a storage unit 42, a communication unit 43, and an operation display unit 44. The components are communicatively connected with each other via a bus. The control unit 41, the storage unit 42, the communication unit 43 and the operation display unit 44 of the manager terminal 40 are not described any further as they have similar features to the control unit 11, the storage unit 12, the communication unit 13 and the operation display unit 14 of the user terminal 10.

### <Pay toilet T>

The pay toilet T is a portable temporary toilet, for example. The pay toilet T has a door at an entrance provided with the lock 231, the lock 231 allowing control of its unlocking and locking. While the lock 231 is unlocked, the entrance can be opened and a user can enter and exit. While the lock 231 is locked, the entrance cannot be opened, so that a user cannot enter and exit.

In the pay toilet T, a toilet bowl for the user to urinate or defecate is disposed. In the pay toilet T of the present embodiment, an excrement treatment agent that can suppress bad odor such as fecal odor and ammonia odor is placed in the toilet bowl. This can suppress generation of bad odor, which has been inevitable with conventional temporary toilets. Conventional temporary toilets are often accompanied by bad odor and have been generally regarded and used as things that are used in places with no permanent toilets out of need. Thus, an idea of collecting fees for using temporary toilets from users has not been conceived even by providers of temporary toilets in the first place. According to the present embodiment, by placing an excrement treatment agent capable of suppressing generation of bad odor as described above, a high-quality temporary toilet can be provided as the pay toilet T and use fees can be collected from users . For example, by installing the pay toilet T of the present embodiment beside a conventional temporary toilet that is available for free, users are allowed to choose a toilet to use according to their sense of values or preference. The excrement treatment agent used in the present embodiment will be described in more detail later .

Each element of the system above may include components other than the components described above or some of the components described above may not be included. Each of the user terminal 10, the control device 20, the server 30 and the manager terminal 40 may be formed by multiple devices or be formed integrally. Further, a function that was described as being performed by a certain component may be performed by another component instead.

### <Features of control device 20 >

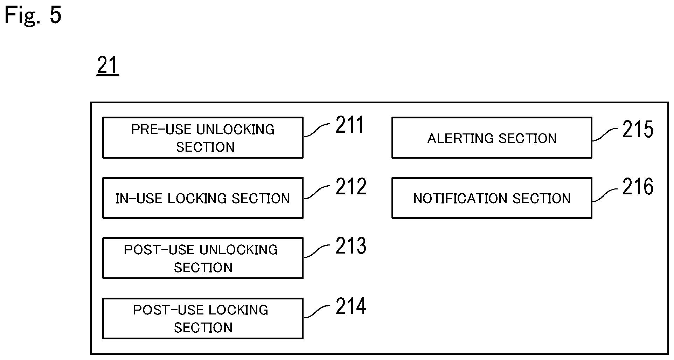

Figure 5 is a block diagram showing a schematic configuration of the pay toilet usage control device shown in Figure 1.

As shown in Figure 5, the control unit 21 of the control device 20 functions as a pre-use unlocking section 211, an in-use locking section 212, a post-use unlocking section 213, a post-use locking section 214, an alerting section 215, and a notification section 216 by reading programs and executing processing.

The pre-use unlocking section 211 controls the lock control unit 23 to unlock the locked lock 231 at the entrance to the pay toilet T when a payment process has been executed via the payment unit 22.

The in-use locking section 212 controls the lock control unit 23 to lock the unlocked lock 231 when the user has executed a payment process and he/she unlocks the lock 231 via the pre-use unlocking section 211 to enter and use the pay toilet T. For example, the in-use locking section 212 locks the lock 231 when it has received an indication regarding locking from the user through the operation receiving unit 25 and the like after the lock 231 is unlocked by the pre-use unlocking section 211. Alternatively, the in-use locking section 212 locks the lock 231 when presence of a user in the pay toilet is detected such as by a sensor of the detection unit 26 after the lock 231 is unlocked by the pre-use unlocking section 211.

The post-use unlocking section 213 controls the lock control unit 23 to unlock the lock 231, which has been locked by the in-use locking section 212, when the user has completed using the pay toilet T.

The post-use locking section 214 controls the lock control unit 23 to lock the unlocked lock 231 after the lock 231 is unlocked by the post-use unlocking section 213. For example, the post-use locking section 214 locks the lock 231 after it is detected by the detection unit 26 that the user has completed using the toilet.

The pre-use unlocking section 211 is controlled to disable unlocking of the lock 231 when the lock 231 is locked by the in-use locking section 212 and is controlled to enable unlocking of the lock 231 when the lock 231 is locked by the post-use locking section 214. Alternatively, unlocking of the lock 231 may be disabled by making a payment process unavailable for execution at the payment unit 22 when the lock 231 is locked by the in-use locking section 212. Similarly, unlocking of the lock 231 may be enabled by making a payment process available for execution when the lock 231 is locked by the post-use locking section 214.

The alerting section 215 executes an alerting process if a state where the lock 231 is locked by the in-use locking section 212 has continued for a predetermined period of time or longer. For example, the alerting section 215 alerts the user in the pay toilet T. In this case, the alerting section 215 executes an alert by outputting sound or an image indicative of an alert via the output unit 27, for example. Alternatively, the alerting section 215 sends an alert to the manager terminal 40 via the server 30 connected by a network.

The notification section 216 notifies the user to lock the lock 231 via the in-use locking section 212 after the lock 231 is unlocked by the pre-use unlocking section 211. For example, the notification section 216 notifies the user to lock by outputting through the output unit 27 sound or an image that promotes locking by operating the operation receiving unit 25.

### <General processing>

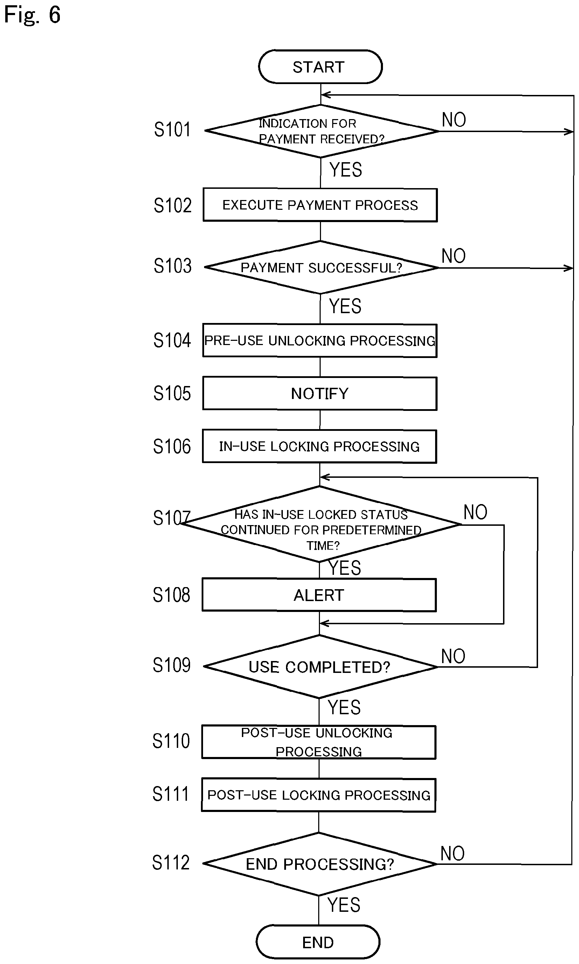

Figure 6 is a flowchart illustrating a procedure of processing that is executed in the pay toilet usage control device. The processing of the control device 20 shown in the flowchart of Figure 6 is stored as a program in the storage unit 24 of the control device 20 and is executed through control of components by the control unit 21.

As shown in Figure 6, the control device 20 determines whether an indication for payment at the payment unit 22 has been received from the user or not (step S101) .

If an indication for payment has not been received (step S101: NO), the control device 20 waits until an indication for payment is received.

If an indication for payment has been received (step S101: YES), the control device 20 controls the payment unit 22 to execute a payment process (step S102) .

The control device 20 determines whether the payment process has been successful or not (step S103) .

If the payment process has not been successful (step S103: NO), the control device 20 returns to step S101.

If the payment process has been successful (step S103: YES), the control device 20 unlocks the lock 231 as the pre-use unlocking section 211 (step S104) .

The control device 20 notifies the user to lock the lock 231 via the in-use locking section 212 (step S105). For example, the control device 20 notifies the user via the output unit 27 to lock the lock 231 by operating the operation receiving unit 25. The operation receiving unit 25 can be implemented as a "close button", a "locking button", or a "lock button" provided for the user in the pay toilet T to lock the lock 231, for example. As will be discussed later, the notification process at step S105 may not be performed if locking of the lock 231 by the in-use locking section 212 is automatically performed.

The control device 20 locks the lock 231 as the in-use locking section 212 (step S106). For example, the control device 20 locks the lock 231 basedonan indication regarding locking received through the user's operation of the operation receiving unit 25. Alternatively, the control device 20 may also execute automatic locking processing to automatically lock the lock 231 based on a certain trigger after the lock 231 is unlocked in the pre-use unlocking processing at step S104. For example, the control device 20 may automatically lock the lock 231 when the lock 231 is unlocked and the entrance door is once opened and closed. Alternatively, the control device 20 may automatically lock the lock 231 if the presence of a user in the pay toilet T is detected by a sensor or the like after the lock 231 is unlocked. This allows the user to open the door again to enter the pay toilet T even if the user inadvertently closed the door without entering the pay toilet T after the lock 231 is unlocked and the entrance door is once opened in automatic locking processing.

The control device 20 performs control such that execution of a payment process via the payment unit 22 is disabled when the lock 231 is locked by the in-use locking section 212. Alternatively, the control device 20 may perform control such that unlocking of the lock 231 via the pre-use unlocking section 211 is disabled when the lock 231 is locked by the in-use locking section 212. This keeps another user from accidentally unlocking the lock 231 to enter the pay toilet T while a user is using the pay toilet T.

The control device 20 determines whether the state where the lock 231 has been locked by the in-use locking processing at step S106 (in-use locked status) has continued for a predetermined usage time or not (step S107). The predetermined usage time is set to a certain amount of time, e.g., 5, 10, 20 or 30 minutes, and can be adjusted as needed according to an environment in which the pay toilet T is installed or situation of use.

If the in-use locked status has not continued for the predetermined period of time, the control device 20 proceeds to the processing at step S109.

If the in-use locked status has continued for the predetermined period of time, the control device 20 executes an alerting process (step S108) . The control device 20 alerts the user in the pay toilet T that the predetermined usage time has elapsed via the output unit 27, for example. Then, the control device 20 may receive an indication that the user extends the predetermined usage time or a payment process related to an additional use fee for the extension of the usage time from the user through the output unit 27 and the operation receiving unit 25. The control device 20 may further access the network and the server 30 via the communication unit 28 and send an alert to the manager terminal 40. For example, the control device 20 may send an alert to the manager terminal 40 if any indication is not received from the user after alerting the user in the pay toilet T upon elapse of a first predetermined period of time and further a second predetermined period of time has elapsed. This can reduce transmissions of alerts to the manager terminal 40, lessening burden on the manager.

The control device 20 determines whether the user has completed using the pay toilet T or not based on a detection result from the detection unit 26 (step S109) .

If the user has not completed using it (step S109: NO), the control device 20 returns to the processing at step S107.

If the user has completed using it (step S109: YES), the control device 20 unlocks the lock 231 as the post-use unlocking section 213 (step S110) . While in the above example the control device 20 was described as executing post-use unlocking processing after determining the completion of use, the present invention is not limited thereto; the control device 20 may also determine that use is completed from the fact that post-use unlocking processing is designated or executed.

The control device 20 locks the lock 231 as the post-use locking section 214 (step 5111). For example, the control device 20 automatically locks the lock 231 in response to a predetermined trigger after the lock 231 is unlocked via the post-use unlocking processing at step S110. For example, the control device 20 may automatically lock the lock 231 when the lock 231 is unlocked via the post-use unlocking processing and the entrance door is opened once and then closed. Alternatively, the control device 20 may automatically lock the lock 231 when it is detected that no user is present in the pay toilet T such as by a sensor after the lock 231 is unlocked via the post-use unlocking processing.

When the lock 231 is locked by the post-use locking section 214, the control device 20 enables execution of a payment process via the payment unit 22 and also enables unlocking of the lock 231 via the pre-use unlocking section 211.

The control device 20 determines whether the processing is to be ended (step S112). If it is to be ended (step S112: YES), the processing is ended such as by turning off a power source (End) . If it is not to be ended (step S112: NO), the control device 20 returns to the processing at step S101 and waits until an indication for payment from a user is received.

As described above, in the control device 20, the payment unit 22 executes a payment process related to the use fee for a user to use the pay toilet, and the pre-use unlocking section 211 unlocks the locked lock 231 at the entrance of the pay toilet T when a payment process has been performed. The in-use locking section 212 locks the unlocked lock 231 when the user uses the pay toilet T. The post-use unlocking section 213 unlocks the locked lock 231 when the user has completed using the pay toilet T. The post-use locking section 214 locks the unlocked lock 231 after the lock 231 is unlocked by the post-use unlocking section 213. This can make users use a temporary toilet and the like appropriately on a chargeable basis.

The pay toilet T is a potable temporary toilet. This allows users to appropriately use pay toilets such as in a place for evacuation at the time of an emergency disaster.

The control device 20 disables execution of a payment process when the lock 231 is locked by the in-use locking section 212 and enables execution of a payment process when the lock 231 is locked by the post-use locking section 214. This can prevent another user from performing a payment process and opening the lock 231 to accidentally enter the pay toilet T while a user is using the pay toilet T.

The pre-use unlocking section 211 is controlled to disable unlocking of the lock 231 when the lock 231 is locked by the in-use locking section 212 and is controlled to enable unlocking of the lock 231 when the lock 231 is locked by the post-use locking section 214. This can prevent another user from opening the lock 231 to accidentally enter the pay toilet T while a user is using the pay toilet T.

The payment unit 22 receives an indication related to a payment process from the user via the payment receiving section 221, which is provided outside the pay toilet T. This enables the user to easily pay the use fee of the pay toilet T using a convenient and beneficial payment means, such as electronic money, via the payment receiving section 221 provided outside the pay toilet T.

The payment unit 22 also executes a payment process by acquiring information on the payment process for the user via the server connected by a network. This allows the user to pay the use fee for the pay toilet T anywhere and anytime by way of various online payment means.

The control device 20 further includes the alerting section 215, which gives an alert when a state where the lock 231 is locked by the in-use locking section 212 has continued for a predetermined period of time or longer. This allows an alert to be given when the user has stayed in the pay toilet T beyond a predetermined usage time.

The alerting section 215 alerts the user in the pay toilet T. This can alert the user when the user has stayed in the pay toilet T beyond a predetermined usage time.

The alerting section 215 also sends an alert to the manager terminal 40 connected by a network. This can inform the manager of the paytoilet T and the like to urge them to take necessary measures , e.g., when no response is received from the user in the pay toilet T even after the user is alerted as described above, for example.

The alerting section 215 also sends an alert to the manager terminal 40 connected by a network when a state where the lock 231 is locked by the in-use locking section 212 has further continued for a predetermined period of time or longer after alerting of the user in the pay toilet T. Thus, an alert is first given to the user to promote an action by the user him/herself, and only if a response is still not received from the user, an alert can be sent to the manager. Consequently, transmissions of alerts to the manager can be reduced, lessening burden on the manager.

The alerting section 215 also alerts the user that a predetermined usage time is to elapse in the pay toilet T and receives an indication that the user extends the predetermined usage time from the user, and the payment unit 22 executes a payment process related to an additional use fee for the extension. This allows the user to extend the usage time of the pay toilet T as need arises or at his/her discretion. The provider of the pay toilet T can also collect extension fees for the extension of the usage time from users easily and without fail.

The control device 20 further includes the notification section 216, which notifies the user to lock the lock 231 via the in-use locking section 212 after the lock 231 is unlocked by the pre-use unlocking section 211. This can promote the user to lock the lock 231 after the user entered the pay toilet T.

The in-use locking section 212 locks the lock 231 by receiving an indication regarding locking from the user. This enables in-use locking processing to be performed with a simple arrangement such as a lock button.

The in-use locking section 212 locks the lock 231 when the presence of a user in the pay toilet T is detected. This enables the lock 231 to be automatically locked after the user has entered the pay toilet T without bothering the user.

The control device 20 further includes the detection unit 26, which detects that the user has completed using the pay toilet T, and the post-use locking section 214 locks the lock 231 after the completion is detected by the detection unit 26. This enables post-use locking processing to be performed without fail after the user has completed using the pay toilet T.

The detection unit 26 also detects completion when the lock 231 is unlocked by the post-use unlocking section 213. This can detect that the user has completed using the pay toilet T with simple arrangement and processing.

The detection unit 26 also detects completion when an indication of completion of use has been received at the indication unit, which receives such an indication from the user. This can detect that the user has completed using the pay toilet T based on an indication from the user with simple arrangement and processing.

The detection unit 26 also detects completion when the presence of a user is no longer detected by a sensor that detects the presence of a user. This can automatically detect that the user has completed using the pay toilet T.

The present invention is not limited to the above-described embodiment but may be subjected to various modifications within the scope of the claims.

Although the embodiment above was described for a case where each component is configured in a single independent device, device configuration is not limited thereto. Each component may be formed of multiple devices or configured being included in a device having other functions . For example, some or all of the processing actions that were described as being performed by the control device 20 may be performed by the server 30 or the manager terminal 40.

Although in the above embodiment the user terminal 10 was illustrated as being a smartphone or a tablet terminal carried by a user, implementation of the user terminal 10 is not limited thereto. The user terminal 10 may also be a goggle-shaped information terminal for wearing on the user's head or a wearable terminal such as an information terminal in the form of a wrist band for wearing on an arm, or an embedded information terminal which is embedded in the user's body.

The blocks of processing in the flowchart of the above embodiment are segmented according to major processing actions in order to facilitate understanding of the processing by the control device 20. The present invention is not limited by the way of grouping processing steps or by an order of processing. The processing that is performed in the control device 20 may also be divided into more processing steps. Also, one processing step may perform more processing and the order of processing steps may be different from that in the flowchart of the above embodiment.

Means and ways of performing various kinds of processing in the system according to the foregoing embodiment can be implemented either by a dedicated hardware circuit or a programmed computer. The program may be provided in a computer-readable recording medium such as a flexible disk and CD-ROM or may be provided online over a network such as the internet, for example. In that case, the program recorded on the computer-readable recording medium is usually transferred to a storage such as hard disk to be stored therein. The program may also be provided as a separate application software or be incorporated into software of the device in question as a feature of the system.

### <Excrement treatment agent>

In the following, the excrement treatment agent used in the embodiments of the present invention is described in detail.

For the excrement treatment agent of embodiments of the present invention, the one described in Republication of PCT International Application No. 2018/190133 can be suitably used, for example. The disclosure of the publication is incorporated herein in its entirety by reference. The excrement treatment agent described in Republication of PCT International Application No. 2018/190133 specifically contains limonite, lignin and bentonite, and in a case where it further contains slaked lime, the content of the slaked lime is 10% or less by mass. The excrement treatment agent in a particularly preferred embodiment contains 11 to 60% limonite by mass, 5 to 35% lignin by mass, 1 to 30% bentonite by mass, 20% or more absorbent polymer by mass, and slaked lime, where the content of the slaked lime is 10% or less by mass and the lignin is not contained in wood flour form. In the present embodiment, the absorbent polymer is contained in 60% or less by mass. In the present embodiment, the content of the slaked lime is 1% or higher by mass. In the present embodiment, the absorbent polymer is starch-based absorbent polymer. In the present embodiment, is a pelletized material including the excrement treatment agent and binder.

The excrement treatment agents according to these embodiments can suppress ammonia odor as well as fecal odor in various settings. Using specific examples of the excrement treatment agents in the above embodiments, experiments were conducted as follows.

### <Preparation of excrement treatment agent>

### (Example 1 and reference examples 1 to 8)

Components to form the excrement treatment agent were mixed in the compositions shown in Table 1 to each prepare 35 g of excrement treatment agent.

### (Reference Example 9)

Except for being in the same composition as in Example 19 of Japanese Patent Laid-Open No. 2014-87779, 35 g of excrement treatment agent was prepared in a similar manner to Example 1.

### <Odor test and ammonia measurement>

200 g of feces and 100 g of urine of a man in his forties were placed in each of polyethylene bags, which were then sealed and let stand for one hour.

The bags were opened and the excrement treatment agents prepared according to Example 1 and Reference Examples 1 to 9 were respectively added in an amount of 35 g and let stand for 30 days, after which an odor sensory test was conducted. In addition, ammonia concentration was measured with a detector tube (a gas detector tube for ammonia (Kitagawa-type) (manufactured by KOMYO RIKAGAKU KOGYO K.K.) with a measurement limit of up to 200 ppm) (shown in Table 1) .

**[Table 1]**

| | Limonite | Lignin | Bentonite | | Slaked lime | Zeolite | Absorbent polymer | | Odor | Ammonia (PPM) |
|---|---|---|---|---|---|---|---|---|---|---|
| | LMB-50 | San X P-202 | KUNIPIA-F | Moistnight S | Ube Materials | ZEOFILL W1 | Polyacrylic acid polymer | Starch-based polymer | | |
| Example 1 TBS-36 | 13.70% | 27.40% | - | 8.22% | 4.11% | - | - | 46.57% | ⊚ | 10 |
| Reference Example 1 TBS-33 | 15.63% | 31.25% | - | - | - | - | - | 53.12% | △ | 0 |
| Reference Example 2 TBS-34 | 31.25% | 15.63% | - | - | - | - | - | 53.12% | △ | 0 |
| Reference Example 3 TBS-31 | 12.05% | 24.10% | 3.61% | 3.61% | 12.05% | 3.61% | - | 40.97% | ○ | 200 or more |
| Reference Example 4 TBS-1 | 100.00% | - | - | - | - | - | - | - | × | No measurement |
| Reference Example 5 TBS-2 | 50.00% | - | - | - | - | - | 50.00% | - | × | 60 |
| Reference Example 6 TBS-11 | 33.33% | - | - | - | 10.00% | - | 56.67% | - | △ | 170 |
| Reference Example 7 TBS-14 | 35.09% | - | - | - | 5.26% | - | 59.65% | - | △ | 80 |
| Reference Example 8 TBS-15 | 28.99% | 8.70% | - | - | 4.35% | 8.70% | 49.26% | - | ○ | 70 |
| Reference Example 9 TBS-26 | 30.3% | - | 4.55% | 4.55% | 4.55% | 4.55% | - | 51.50% | ○ | 46 |
| Reference Example 10 TBS-37 | - | 31.75% | 4.76% | 4.76% | - | 4.76% | - | 53.97% | × | 30 |
| Reference Example 11 | | | | | | | | | ○ | 200 or more |

| | | | | | | | | | | |
|---|---|---|---|---|---|---|---|---|---|---|
| Limonite: LBM-50 volume average particle size: Lignin: San X P-202 average particle size: KUNIPIA-F average particle size: Moistnight S average particle size: Slaked lime: manufactured by Ube Material Industries, passed through 100 mesh Zeolite ZEOFILL W1 volume average particle size: Polyacrylic acid polymer SANFRESH ST-250 average particle size: 380 µm (over 850 µm about 1% by mass, over 106 µm and 850 µm or less 89% by mass, 106 µm or less about 10% by mass) Starch-based polymer SANFRESH ST-100, average particle size: 380 µm (over 850 µm about 1% by mass, over 106 µm and 850 µm or less 89% by mass, 106 µm or less about 10% by mass) ⊚ Almost no odor ○ Odor persisting △ Somewhat strong odor × Strong odor (bad odor) | | | | | | | | | | |

### <Results and observations>

With the excrement treatment agent of Example 1, not only fecal odor but ammonia odor were suppressed even after treated excrement was left as long as 30 days.

For Reference Examples 1 and 2, fecal odor persisted, while no ammonia was recognized because generation of ammonia was low in the first place due to absence of slaked lime and also because lignin was contained.

For Reference Example 3, ammonia concentration was high since the content ratio of slaked lime in the excrement treatment agent was over 10% by mass. Accordingly, fecal odor was suppressed by action of limonite, lignin, bentonite, slaked lime and the like, while irritating odor originating from ammonia was strong and odor persisted.

Reference Example 4 is an experiment using limonite only, which resulted in bad odor like fermented garbage.

Reference Example 5 is an experiment in which half of the composition of Reference Example 4 is replaced with absorbent polymer, where odor was lower than in Reference Example 4 owing to absorption of moisture, but bad odor like fermented garbage was still perceived.

For Reference Examples 6 and 7, generation of ammonia was also promoted due to addition of slaked lime based on the composition Reference Example 5, and an unpleasant odor combining irritating odor of ammonia and organic smell was generated in both cases.

Reference Example 8 is close to the compositions of the example but without bentonite. As a result, in terms of odor, an unpleasant odor combining irritating odor of ammonia and organic smell was generated as with Reference Examples 6 and 7. In other words, it was implied that limonite, lignin, and bentonite worked together to provide an anticipated effect of the present invention. Moreover, it is suggested that the combination of zeolite, a known component that adsorbs bad odor, and lignin does not provide the anticipated effect of the present invention but the combination of lignin and bentonite is important.

For Reference Example 9, less fecal odor was felt since a large amount of slaked lime was contained but correspondingly generation of ammonia was promoted. Thus, organic smell was mixed with the irritating odor of ammonia to result in an unpleasant odor.

As has been described above, the excrement treatment agent according to the embodiment of the present invention can suppress not only fecal odor but ammonia odor in various settings. This can make a temporary toilet one that users are willing to pay to use. Of course, the excrement treatment agent used with the present invention is not limited to the excrement treatment agent of the above embodiment but any other known excrement treatment agent may be used.

### Reference Signs List

10: user terminal
11: control unit
12: storage unit
13: communication unit
14: operation display unit
15: payment processing unit
20: pay toilet usage control device
21: control unit
211: pre-use unlocking section
212: in-use locking section
213: post-use unlocking section
214: post-use locking section
215: alerting section
216: notification section
22: payment unit
221: payment receiving section
23: lock control unit
231: lock
24: storage unit
25: operation receiving unit
26: detection unit
27: output unit
28: communication unit
30: server
31: control unit
32: storage unit
33: communication unit
40: manager terminal
41: control unit
42: storage unit
43: communication unit
44: operation display unit

## Claims

1. A pay toilet usage control device comprising:
a payment unit that executes a payment process related to a use fee for a user to use a pay toilet;
a pre-use unlocking section that unlocks a locked lock at an entrance to the pay toilet when the payment process has been executed;
an in-use locking section that locks the unlocked lock when the user uses the pay toilet;
a post-use unlocking section that unlocks the locked lock when the user has completed using the pay toilet; and
a post-use locking section that, after the lock is unlocked by the post-use unlocking section, locks the unlocked lock.

2. The pay toilet usage control device according to claim 1, wherein the pay toilet is a portable temporary toilet.

3. The pay toilet usage control device according to claim 1 or 2, wherein the payment unit disables execution of the payment process when the lock is locked by the in-use locking section and enables execution of the payment process when the lock is locked by the post-use locking section.

4. The pay toilet usage control device according to any of claims 1 to 3, wherein the pre-use unlocking section is controlled to disable unlocking of the lock when the lock is locked by the in-use locking section and is controlled to enable unlocking of the lock when the lock is locked by the post-use locking section.

5. The pay toilet usage control device according to any of claims 1 to 4, wherein the payment unit receives an indication regarding the payment process from the user via a payment receiving section provided outside the pay toilet.

6. The pay toilet usage control device according to any of claims 1 to 5, wherein the payment unit executes the payment process by acquiring information on the payment process for the user via a server connected by a network.

7. The pay toilet usage control device according to any of claims 1 to 6, further comprising an alerting section that gives an alert when a state where the lock is locked by the in-use locking section has continued for a predetermined period of time or longer.

8. The pay toilet usage control device according to claim 7, wherein the alerting section alerts the user in the pay toilet.

9. The pay toilet usage control device according to claim 7 or 8, wherein the alerting section sends an alert to a manager terminal connected by a network.

10. The pay toilet usage control device according to any of claims 7 to 9, wherein the alerting section sends an alert to a manager terminal connected by a network when a state where the lock is locked by the in-use locking section has further continued for a predetermined period of time or longer after alerting of the user in the pay toilet.

11. The pay toilet usage control device according to any of claims 7 to 10, wherein
the alerting section alerts the user that a predetermined usage time is to elapse in the pay toilet and receives an indication that the user extends the predetermined usage time from the user, and
the payment unit executes a payment process related to an additional use fee for the extension.

12. The pay toilet usage control device according to any of claims 1 to 11, further comprising a notification section that notifies the user to lock the lock via the in-use locking section after the lock is unlocked by the pre-use unlocking section.

13. The pay toilet usage control device according to any of claims 1 to 12, wherein the in-use locking section locks the lock by receiving an indication regarding locking from the user.

14. The pay toilet usage control device according to any of claims 1 to 13, wherein the in-use locking section locks the lock when presence of the user in the pay toilet is detected.

15. The pay toilet usage control device according to any of claims 1 to 14, further comprising:
a detection unit that detects that the user has completed using the pay toilet,
wherein the post-use locking section locks the lock after the completion is detected by the detection unit.

16. The pay toilet usage control device according to claim 15, wherein the detection unit detects the completion when the lock is unlocked by the post-use unlocking section.

17. The pay toilet usage control device according to claim 15 or 16, wherein the detection unit detects the completion when an indication of completion of use is received by an indication unit that receives the indication from the user.

18. The pay toilet usage control device according to any of claims 15 to 17, wherein the detection unit detects the completion when presence of the user is no longer detected by a sensor that detects the presence of the user.

19. A pay toilet system comprising:
the pay toilet usage control device according to any of claims 1 to 18; and
a portable temporary toilet including an unlocking- and locking-controllable lock at an entrance.

20. A pay toilet usage control program for making an information processing device function as the pay toilet usage control device according to any of claims 1 to 18.
